# EUROPÄISCHE PATENTSCHRIFT

(11) **EP 0 647 166 B1**
(45) Veröffentlichungstag und Bekanntmachung des Hinweises auf die Patenterteilung: **20.08.1997**
(21) Anmeldenummer: 94912481.2
(22) Anmeldetag: 23.04.1994
(51) Int. Cl.: B23B 51/10

(54) **BOHR-FAS-WERKZEUG**
DRILLING AND CHAMFERING TOOL
OUTIL DE PERCAGE ET DE CHANFREINAGE

(30) Priorität: 23.04.1993 DE 9306141 U; 09.03.1994 DE 9403927 U
(43) Veröffentlichungstag der Anmeldung: 12.04.1995
(73) Patentinhaber: KENNAMETAL HERTEL AG Werkzeuge + Hartstoffe, 90766 Fürth (DE)
(72) Erfinder: JÄGER, Horst, D-90451 Nürnberg (DE); SCHUFFENHAUER, Michael, D-90765 Fürth (DE); MÜLLER, Gebhard, D-90766 Fürth (DE); BORSCHERT, Bernhard, D-90408 Nürnberg (DE); KRENZER, Ulrich, D-90513 Zirndorf (DE)
(74) Vertreter: Tergau, Enno, Dipl.-Ing.
(86) Internationale Anmeldenummer: DE9400450
(87) Internationale Veröffentlichungsnummer: WO9425210

(56) Entgegenhaltungen:
- EP-A- 0 146 030
- DE-U- 9 004 316
- FR-A- 598 473
- US-A- 4 353 670

## Beschreibung

Die Erfindung betrifft ein als Bohr-Fas-Werkzeug wirksames Rundlaufwerkzeug zum in einer gemeinsamen Bohrvorschubbewegung erfolgenden Bohren und Anfasen mit den Merkmalen des Oberbegriffs des Anspruches 1.

Ein aus DE-U-92 061 148 bekanntes derartiges Werkzeug weist an dem bohrerseitigen Ende des den Bohrerschaft spannenden Grundkörpers einen mit einem Fasschneidkörper bestückten, gegen eine Nebenfreifläche des Bohrers verstellbaren Schlitten als Träger eines Schneidkörpers auf, welcher das vom Bohrer gebohrte Bohrloch mit der in Axialrichtung des Bohrers erfolgenden Vorschubbewegung ansenkt bzw. anfast. Dadurch können derartige Bohr-Fas-Werkzeuge mit jedem beliebigen Bohrdurchmesser unter Verwendung von Standardbohrern hergestellt werden. Das mit dem Bohrer zu kombinierende Faswerkzeug bzw. die Fasschneide lassen sich an den Wirkdurchmesser des Bohrers durch schlittenartige Zustellbarkeit flexibel anpassen. In einem Grundkörper können dabei Bohrer desselben Schaftdurchmessers gespannt werden, wobei allerdings der Wirkdurchmesser der einzelnen im selben Grundkörper zu spannenden Bohrer vom einheitlichen Schaftdurchmesser abweichen kann.

Wird bei einem derartigen Bohr-Fas-Werkzeug ein Standardbohrer mit dem Wirkdurchmesser A ausgetauscht gegen einen Standardbohrer mit einem anderen Wirkdurchmesser B, muß das Faswerkzeug an den Wirkdurchmesser des neuen Bohrers adaptiert werden. Dies geschieht durch seine schlittenartige Verstellbarkeit gegenüber dem Grundkörper. Bei dem bekannten Werkzeug der eingangs genannten Art bildet diese Verstell- bzw. Zustellrichtung des Faswerkzeuges einen spitzen Winkel mit der Bohrerachse. Dies bedeutet, daß sich durch die Zustellbewegung des Faswerkzeuges das Einstellmaß verändert. Dieses Einstellmaß ist der Abstand der Schneidspitze des Faswerkzeuges von der Bohrerspitze. Ein Wechsel im Wirkdurchmesser des Bohrers bedeutet also zwangsläufig einen Wechsel des genannten Einstellmaßes. Um die Senktiefe des Werkzeuges bei einem Durchmesserwechsel konstant zu halten, bedarf es also immer einer Neueinstellung der Bohrtiefe. Demgegenüber wird die Senktiefe auch bei einem Wechsel des Wirkdurchmessers des Bohrers und anschließendem Nachjustieren des Fasschneidkörpers durch die Lehre des Anspruches 1 konstant gehalten. Hierbei wird davon ausgegangen, daß Standardbohrer gleichen Schaftdurchmessers, aber unterschiedlichen Wirkdurchmessers im wesentlichen die gleiche Wirklänge in Axialrichtung aufweisen.

Die Unteransprüche befassen sich mit vorteilhaften Ausgestaltungen eines Bohr-Fas-Werkzeuges bzw. eines Bohr-Senk-Werkzeuges der eingangs genannten Art. Das Faswerkzeug soll schwingungssicher am Grundkörper spannbar und so ausgebildet sein, daß die Spanabfuhr nicht behindert wird. Besonders kritisch ist dabei die Schneidspitze des Faswerkzeuges, die einen vergleichsweise kleinen Eckenwinkel ∈ von ca. 45° aufweist. Es ist dies der Winkel zwischen der Hauptschneide, die den Kegelwinkel der Ansenkung bestimmt und beispielsweise in einem Winkel von 45° zur Bohrerachse bzw. zur Bohrlochachse steht, und der Nebenschneide, die die Nebenfreifläche des Bohrers flankiert. Wegen der Spitzwinkligkeit des Eckenwinkels ist dieser besonders bruchgefährdet. Er darf allenfalls leicht radial gegen die Nebenfreifläche des Bohrers gepreßt werden, weil andernfalls eine erhöhte Beschädigungsgefahr besteht. Ideale Verhältnisse liegen dann vor, wenn die Spitze des Faswerkzeuges einen geringen Abstand von der Nebenfreifläche des Bohrers hält und nur der erforderliche Schneidenüberstand zwischen Bohrerschneide und Senk- bzw. Fasschneide vorliegt. Wenn bisher nur von einem Faswerkzeug an einem Grundkörper in der Einzahl gesprochen wurde, so ist es in gleicher Weise möglich oder sogar üblich, über den Bohrerumfang verteilt eine der Anzahl von Bohrerschneiden entsprechende Anzahl von Fasschneiden bzw. Faswerkzeugen vorzusehen.

Durch die Ausbildung eines Faswerkzeuges nach Anspruch 2 ist prinzipiell eine sichere Spannung und Auflage des Schneidkörpers am Grundkörper sowohl in den Hauptschnittdruck aufnehmender Umfangsrichtung als auch in Bohrvorschubrichtung gewährleistet. Eine besonders sichere, definierte Spannung des Fasschneidkörpers am Grundkörper ist durch die Merkmale der Ansprüche 3 - 5 gewährleistet. Eine Einhaltung der gewünschten Spannrichtung ist durch Anspruch 6 begünstigt. Am einfachsten könnte die Spannung nach Anspruch 7 vorgenommen werden. Sicherer ist indessen diese Spannung nach Anspruch 8. Wenn die Pratze nur auf der Schraube gelagert ist, unterliegt sie infolge der Exzentrizität ihrer aufliegenden Drucknase einer Verkantung gegenüber der Schraube. Um einer solchen Verkantung entgegenzuwirken, ist eine Ausgestaltung der Pratze nach Anspruch 11 vorgesehen. Anspruch 12 ermöglicht eine unverlierbare Fixierung der Pratze an der Schraube.

Die Ansprüche 13 und 14 sind darauf gerichtet, die Exzentrizität des Kraftangriffes an der Pratzennase soweit wie möglich wirkungsmäßig zu neutralisieren. Die Weiterbildung nach Anspruch 15 sichert eine Geradführung der Pratze bei ihrer Spannbewegung. Anspruch 16 bildet eine Verliersicherung für den Schneidkörper auch bei nicht festgezogener Fixierschraube bzw. Spannpratze. Die Ansprüche 17 und 18 stellen eine besonders wichtige Weiterbildung dar, die eine bequeme und sichere Justierung des Faswerkzeuges am Grundkörper gegenüber unterschiedlichen Wirkdurchmessern des Bohrers ermöglicht. Bei gelöster Fixierschraube braucht das Faswerkzeug nur soweit an den Bohrer herangeführt zu werden, bis die Spitze des Fasschneidkörpers an die Nebenfreifläche des Bohrers anschlägt. Wird sodann die Fixierschraube angezogen, so wird automatisch das Federglied soweit komprimiert, bis die Anlagerippe des Schneidkörpers an die Anlageflanke der Nut anschlägt. Dabei hebt die Spitze des Fasschneidkörpers um einen geringfügigen, durch das Maß des Federweges vorbestimmten Betrag von der Nebenfreifläche des Bohrers ab. Dort entsteht der gewünschte Abstand zur Nebenfreifläche, der indessen immer noch durch die Bemessung des Federkompressionsweges den erforderlichen Schneidenüberstand über den Senkbereich gewährleistet. Anspruch 20 schafft für diese Ausgleichsbewegung den notwendigen Freiraum.

Die Ansprüche 21 ff befassen sich mit einer besonders zweckmäßigen Einrichtung zum Klemmen des Bohrers am Grundkörper.

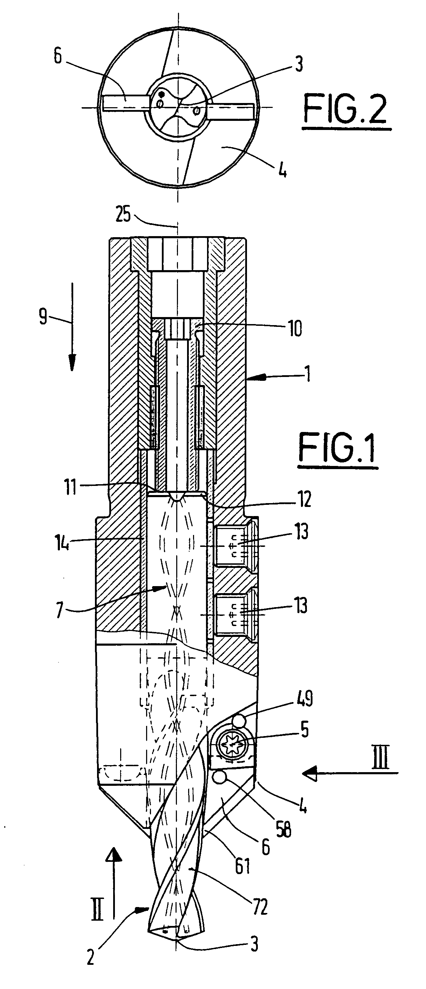

Der Gegenstand der Erfindung wird anhand von in den Figuren dargestellten Ausführungsbeispielen näher erläutert. Es zeigen
- Fig. 1: einen Längsschnitt durch das erfindungsgemäße Werkzeug,
- Fig. 2: eine Stirnansicht des Werkzeuges in Pfeilrichtung II von Fig. 1,
- Fig. 3: eine vergrößerte Ansicht des unteren Werkzeugendes im Bereich III von Fig. 1 mit gespanntem Fasschneidkörper,
- Fig. 4: eine Draufsicht analog Fig. 3 auf die Bettung des Fas-Schneidkörpers bei abgenommener Spannpratze mit strichpunktiert angedeuteter Stellung des in Spannausgangsstellung befindlichen Fasschneidkörpers,
- Fig. 5: eine Darstellung analog Fig. 4 mit angedeuteter Spannendstellung des Fas-Schneidkörpers,
- Fig. 6: eine Darstellung analog Fig. 4 mit in Spannausgangsstellung befindlichem, von der Spannpratze beaufschlagten Schneidkörper,
- Fig. 7: einen Schnitt entsprechend der Linie VII-VII in Fig.6 durch die Spannmittel zur Fixierung des Fas-Schneidkörpers,
- Fig. 8: eine Draufsicht auf die Spanfläche des Fas-Schneidkörpers,
- Fig. 9: eine Seitenansicht in Pfeilrichtung IX von Fig. 8,
- Fig. 10: eine Vorderansicht des Schneidkörpers in Pfeilrichtung X von Fig. 9,
- Fig. 11: eine Draufsicht auf eine modifizierte Ausführungsform von Fas-Schneidkörper und Klemmpratze,
- Fig. 12: einen Teilschnitt entsprechend der Linie XII-XII in Fig. 11,
- Fig. 13: eine Seitenansicht - teilweise im Schnitt - von Fixierschraube und Spannpratze,
- Fig. 14: eine Draufsicht auf die Spannpratze,
- Fig. 15: eine Seitenansicht der Spannpratze teilweise im Schnitt,
- Fig. 16: eine Schnittdarstellung des Grundkörpers im Bereich des Schneidplattensitzes analog Fig.7,
- Fig. 17: eine Draufsicht auf den Schneidkörpersitz entsprechend Pfeil XVII in Fig. 16,
- Fig. 18: eine perspektivische Darstellung des Bohrers mit der seinen Schaft umgebenden Spannhülse und schematisch angedeutet den Spannschrauben,
- Fig. 19 a) - c): unterschiedliche Querschnittdarstellungen im Bereich der Bohrerspannung mit unterschiedlichen Drehstellungen des Bohrers gegenüber dem Grundkörper,
- Fig. 20: die den Bohrerschaft beim Spannen umgebende Spannhülse - teilweise im Schnitt - in unterschiedlichen Drehstellungen,
- Fig. 21: einen Schnitt entsprechend der Schnittlinie XXI-XXI in Fig. 20c),
- Fig. 22: einen Schnitt entsprechend der Linie XXII-XXII in Fig. 20b),
- Fig. 23 + 24: Querschnittdarstellungen von modifizierten Ausführungen der Bohrerspannung analog Fig. 19.
Das Bohr-Fas-Werkzeug besteht im wesentlichen aus dem Grundkörper 1 mit darin gespannt dem Bohrer 2 und dem am der Bohrerspitze 3 zugewandten Stirnende 4 des Grundkörpers 1 angeordneten, durch die Spannschraube 5 gespannten Fas-Schneidkörper 6. Der Bohrer 2 enthält den Schaft 7 und das umfangseitig gewendelte, mit dem Wirkdurchmesser 8 ausgestattete Bohrerende, welches aus dem Grundkörper 1 hinaussteht.

Der Bohrer 2 ist in Axialrichtung 9 durch eine Vorschubeinrichtung 10 verstellbar. Die Vorschubeinrichtung 10 ist eine Stellspindel, deren Druckende 11 das rückseitige Schaftende 12 des Bohrers 2 beaufschlagt. Die Spannung des Bohrers 2 erfolgt über die Fixierschrauben 13, die radial den rohrförmigen Grundkörper 1 durchsetzen und eine den Schaft 7 des Bohrers 2 umgebende Stahlblechhülse 14 beaufschlagen.

Das am unteren Stirnende 4 des Grundkörpers 1 angeordnete Fas-Schneidwerkzeug besteht im wesentlichen aus dem Schneidkörper 6 und der von der Spannschraube 5 beaufschlagten und seinerseits mit der Nase 16 den Schneidkörper 6 an seinem rückwärtigen Ende beaufschlagenden Spannpratze 15.

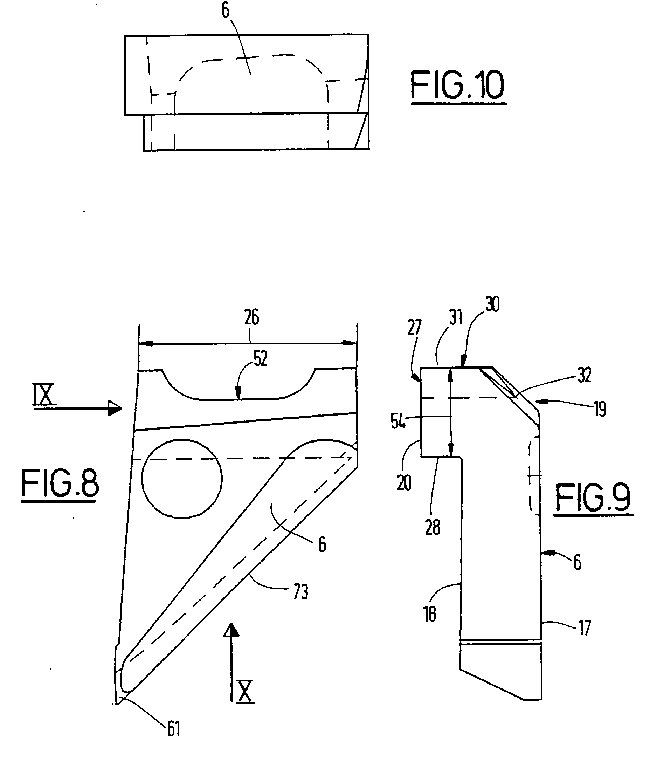

Der Schneidkörper 6 ist in den Fig. 8-10 allein dargestellt. Seine Deckfläche 17 und seine Auflagefläche 18 sind planparallel. An seinem rückseitigen Ende 19 steht ein Anlagevorsprung 20 etwa rechtwinklig über die Auflagefläche 18 hinaus. Mit diesem Anlagevorsprung 20 greift der Schneidkörper 6 in eine gegenüber der Montagefläche 21 des Grundkörpers 1 vertiefte Grundkörpernut 22 ein und verläuft mit ihrer Längsachse 23 in einem rechten Winkel 24 zur Bohrer- und Grundkörperachse 25. Innerhalb der Grundkörpernut 22 ist der Schneidkörper 6 radial zur Grundkörperachse 25 verstellbar. Die Verstellrichtung verläuft rechtwinklig zur Grundkörperachse 25. Der Schneidkörper 6 ist in beliebigen Verschiebestellungen innerhalb der Nut 22 durch die Spannpratze 15 festklemmbar. Der Anlagevorsprung 20 ist eine sich über die gesamte Breite 26 des Schneidkörpers 6 erstreckende Anlagerippe 27.

Der Schneidkörper 6 wird in montiertem Zustand durch eine Haltekraft mit seinem Anlagevorsprung 20 bzw. mit der Druckflanke 28 seiner Anlagerippe 27 in Richtung etwa zur Bohrerspitze 3 gegen die bohrerspitzenseitige Nutanlageflanke 29 gepreßt und zusätzlich mit seiner Auflagefläche 18 gegen die Montagefläche 21 am Grundkörper 1 beaufschlagt.

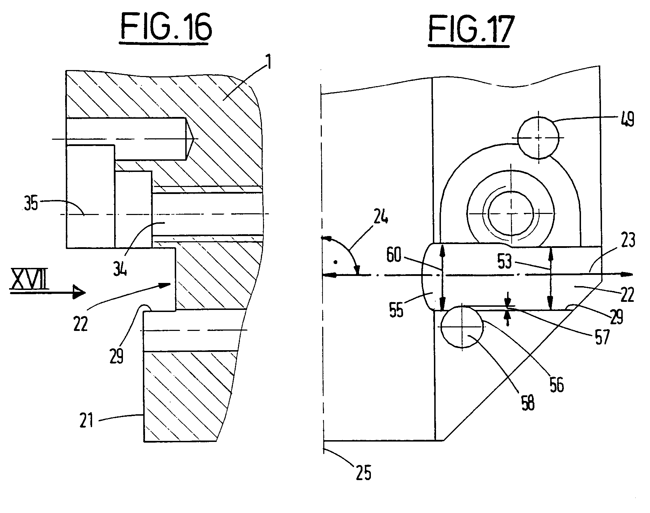

Der Schneidkörper 6 ist an seinem in montiertem Zustand der Bohrerspitze 3 abgewandten Ende 30 zwischen Deckfläche 17 und rückseitiger Stirnfläche 31 mit einer nach Art einer Faskante ausgebildeten, zwischen diesen Flächen 17,31 wirksamen Schrägfläche 32 versehen, die von der Fixierschraube 13 bzw. von der Nase 16 der Spannpratze 15 im wesentlichen lotrecht beaufschlagt wird. Diese Beaufschlagung kann unmittelbar durch die Kopfflanke einer Senkkopfschraube erfolgen, die etwa lotrecht zur Montagefläche 21 in den Grundkörper 1 z.B. in das Schraubloch 34 eingeschraubt ist (Fig.16). Seine Achse ist mit 35 bezeichnet.

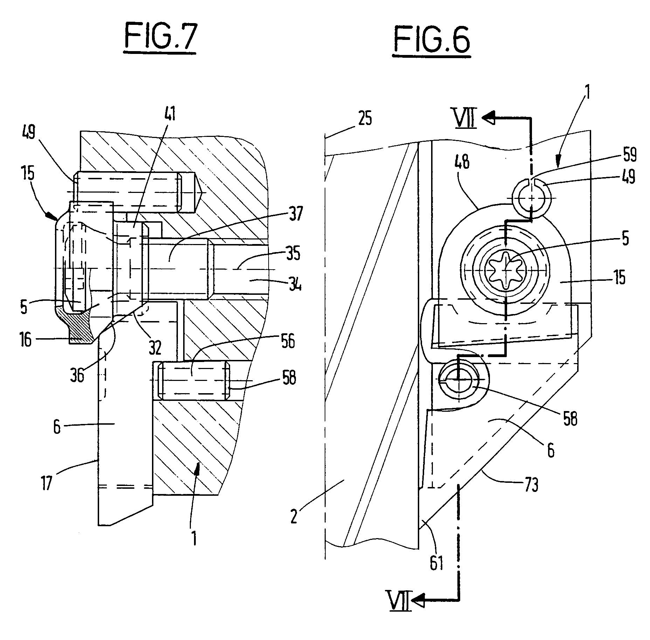

In den Ausführungsbeispielen sind zwei unterschiedliche Formen von Spannpratzen dargestellt. Die Nase 16 der Spannpratze 15 weist eine zur Schneidkörperschrägfläche 32 etwa parallele Druckfläche 36 auf, die die Schrägfläche 32 im Bereich ihres Überganges in die Schneidkörperdeckfläche 17 tangiert. Beim aus Fig. 7 ersichtlichen Ausführungsbeispiel besteht ein deutlicher Winkel zwischen der Schrägfläche 32 und der Druckfläche 36. In angezogenem Zustand verkantet sich die Spannpratze 15 etwas gegenüber der Längsachse 35 des den Schraubenschaft 37 der Spannschraube 5 aufnehmenden Schraubloches 34 und dadurch stellt sich die Druckfläche 36 mehr parallel zur Schrägfläche 32.

Der Konusmantel 38 der Spannschraube 5 entspricht hinsichtlich seines Konuswinkels etwa dem Innenkonus 39 der Spannpratze 15.

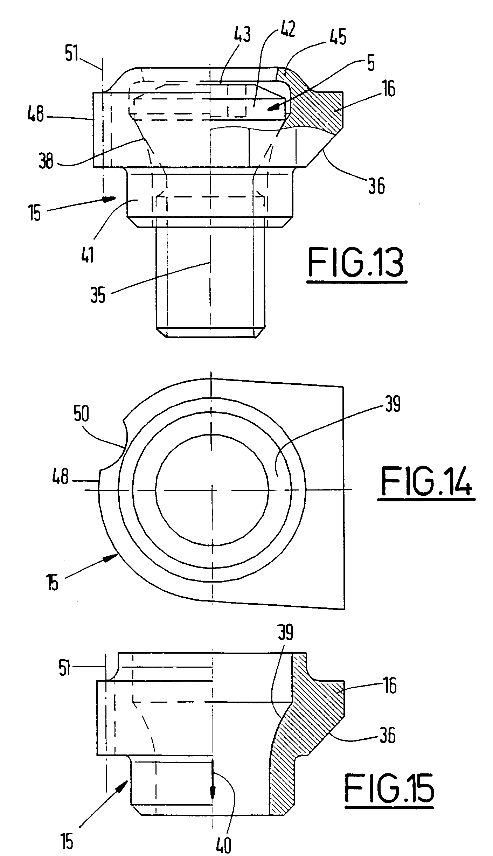

Im Kopfbereich der Spannpratze 15 ist in Axialrichtung 40 der Schraube 5 ein Ringkragen 41 zur führungsmäßigen Umfassung des kopfseitigen Endes des Schraubenschaftes 37 angeformt (Fig.13). Er dient zur besseren axialen Ausrichtung und Abstützung der Spannpratze 15 gegenüber Grundkörper 1 und Schneidkörper 6. Die Pratze 15 umfaßt die Ringkante 42 der Schraubendeckfläche 43 mit einem zur Schraubenachse 35 einwärts gebördelten Hintergriff 44 und sichert damit die Unverlierbarkeit der Spannpratze 15 gegenüber der Spannschraube 5.

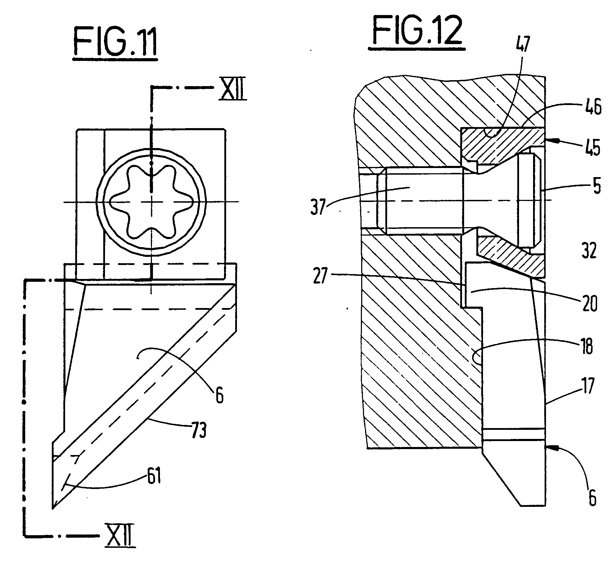

Bei einer in den Fig. 11,12 dargestellten Alternativform ist die Spannpratze 45 mit ihrer dem Schneidkörper 6 abgewandten Umfangsseite 46 von der der Bohrerspitze 3 abgewandten Seitenwand 47 der Grundkörpernut 22 abgestützt.

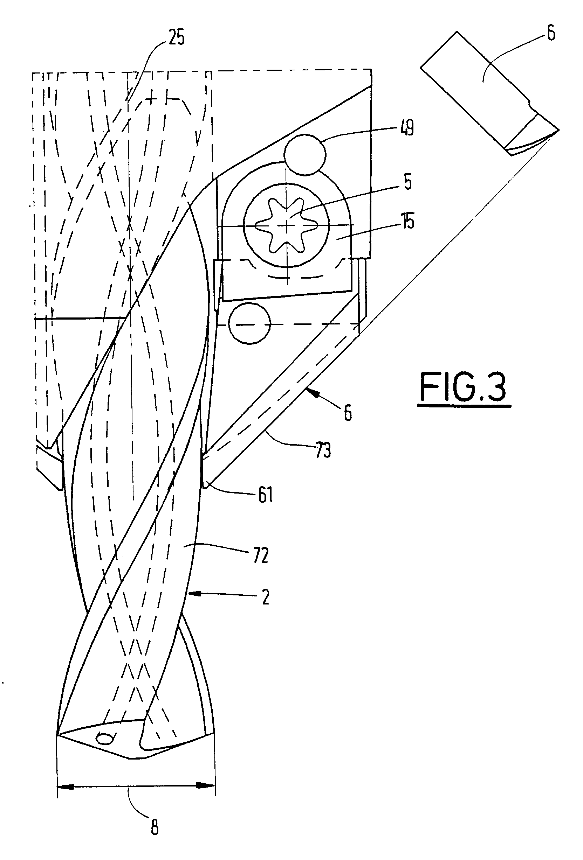

Bei der im Vordergrund stehenden Ausführungsform gemäß den Fig.3 ff ist die Spannpratze 15 mit ihrer dem Schneidkörper 6 abgewandten Umfangsseite 48 durch einen parallel zur Schraubenachse 35 in den Grundkörper 1 eingebrachten Spannstift 49 abgestützt. Die Spannpratze 15 ist mit einer in Nutlängsrichtung 51 verlaufenden nutartigen Ausnehmung 50 versehen. Die Ausnehmung 50 verläuft etwa parallel zur Schraubenachse 35 und zur Stiftachse 51. Sie dient zur Einlage des Spannstiftes 49 als gegenüber der Spannpratze 15 wirksame Drehsicherung. Der Spannstift 49 ist beispielsweise ein solcher, wie er im Prospekt CONNEX 1088-3 der Firma CONNEX AG, CH-6260 Reiden, Seite 21 beschrieben und dort als Leichtspannstift Typ L bezeichnet ist.

Die rückseitige Stirnfläche 31 des Schneidkörpers 6 ist mit einer Ausmuldung 52 versehen. Diese Ausmuldung 52 dient zum über den Verstellbereich möglichen, partiell einliegenden und als Verliersicherung wirksamen Hindurchreichen der Pratze 15 bzw. ihres Ringkragens 41.

Die Breite 53 der Grundkörpernut 22 entspricht etwa der rechtwinklig zur Verstellrichtung 23 wirksamen Breite 54 der Anlagerippe 27.

Im Bereich des bohrerseitigen Nutendes 55 steht ein Federglied 56 aus der Nutanlageflanke 29 in unbelastetem Zustand um das Maß 57 in Richtung auf die Druckflanke 28 der Anlagerippe 27 vor. Das Federglied ist der Umfang eines parallel zur Schraubenachse 35 in den Grundkörper 1 eingebrachten Spannstiftes 58. Der Spannstift 58 hat wie der Spannstift 49 die Form eines etwa in Längsrichtung geschlitzten Rohres. Die Rohrschlitze 59 ermöglichen eine radial nach innen gerichtete Einfederbarkeit.

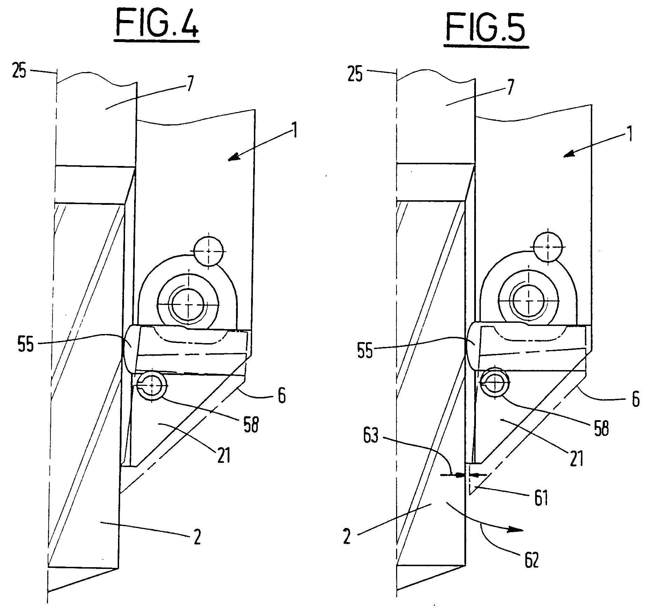

Weiter oben wurde gesagt, daß die Breite 53 der Grundkörpernut 22 etwa der rechtwinklig zur Verstellrichtung 23 wirksamen Breite 54 der Anlagerippen 27 entspricht. Dies gilt jedoch im Bereich des bohrerseitigen Nutendes 55 mit der Ausnahme, daß dort die Nutbreite 60 größer ist als die Nutbreite 53 im radial weiter außen liegenden Nutbereich. Die Größendifferenz entspricht dem Vorstehmaß 57 des Federgliedes 58. Diese Ausgestaltung ermöglicht eine einfache Justierung des Fas-Schneidkörpers 6 gegenüber unterschiedlichen Wirkdurchmessern des Bohrers 2. Diese Justierung wird wie folgt vorgenommen: Bei gelöster Spannschraube 5 wird der Schneidkörper 6 mit seiner Schneidspitze 61 an die Nebenfreifläche des Bohrers 2 angelegt. Dies erfolgt bei um das Vorstehmaß 57 über die Anlageflanke 29 der Grundkörpernut 22 hinausstehendem Spannstift 58. Auf Grund des entspannnt vorstehenden Spannstiftes 58 (Fig.4) liegt der Schneidkörper 6 leicht verkantet innerhalb der Grundkörpernut 22. Seine Anlagerippe 27 bildet einen sehr spitzen Winkel mit der Nutlängsachse 23.

Nunmehr wird die Spannpratze 15 gespannt, indem die Schraube 5 angezogen wird. Dabei beaufschlagt ihre Nase 16 über die Druckfläche 36 die rückseitige Schrägfläche 32 des Schneidkörpers 6 und drückt diesen in Richtung auf die Bohrerspitze. Dadurch komprimiert der Spannstift 58, indem sich sein Wirkdurchmesser verkleinert. Diese Kompressionsstellung ist in Fig. 5 dargestellt. Dadurch vollzieht die Schneidkörperspitze 61 eine leichte Schwenkung in Schwenkrichtung 62. Dadurch verliert die Schneidkörperspitze 61 ihren Kontakt mit der Nebenfreifläche des Bohrers 2 und gewinnt damit einen der Schonung der Schneidkörperspitze 61 dienenden Abstand vom Bohrer 2. Das Abstandsmaß 63 läßt sich einfach durch das Überstehmaß 57 des Spannstiftes 58 über die Anlageflanke 29 der Grundkörpernut 22 in entspanntem Zustand bestimmen.

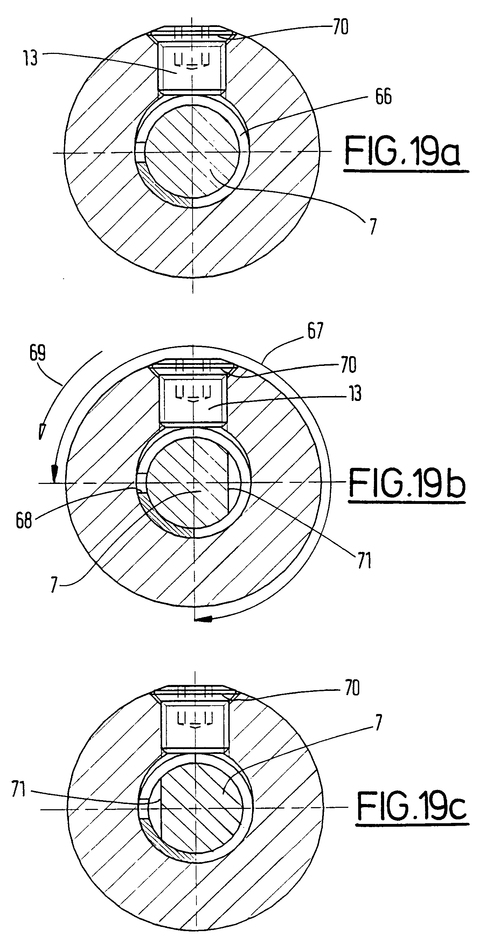

Die Spannung des Bohrers 2 erfolgt über seinen Schaft 7. Dieser Schaft 7 ist von einer metallischen Hülse 14 umgeben. Die Hülse 14 ist durch in Umfangsrichtung nebeneinander angeordnete, im wesentlichen zueinander parallele Schlitze 64 sowie durch eine in Axialrichtung 25 verlaufende Hülsenmantelschlitzung 65 mit radial einfederbaren, sich über einen Teil des Hülsenumfanges erstreckenden Mantelzungen 66 versehen. Die Umfangsschlitze 64 erstrecken sich über einen Umfangswinkel 67 von ca. 270°. Dadurch bilden sie zwischen sich Zungen 66. Die freien Zungenenden 68 weisen in Bohrerdrehrichtung 69. Die Zungen 66 der Hülse 14 sind so positioniert, daß sie im Bereich ihrer Zungenenden von den Fixierschrauben 13 beaufschlagt werden (Fig.19). Die Fixierschrauben 13 sind mit Senkköpfen 70 versehen, die die Einschraubtiefe limitieren. So können die Zungen 66 nicht beschädigt oder deformiert werden, wenn sich der Schaft 7 eines Standardbohrers mit seiner Abflachung 71 im Beaufschlagungsbereich einer Fixierschraube 13 befindet. Durch die zur Bohrerdrehrichtung gleichsinnige Ausrichtung eines von der Fixierschraube 13 beaufschlagten Zungenendes
68 wird der Senkkopf beim Anziehen der Fixierschraube 13 in Richtung Bohrer verschoben und somit gezielt am Bohrer zur Anlage gebracht.

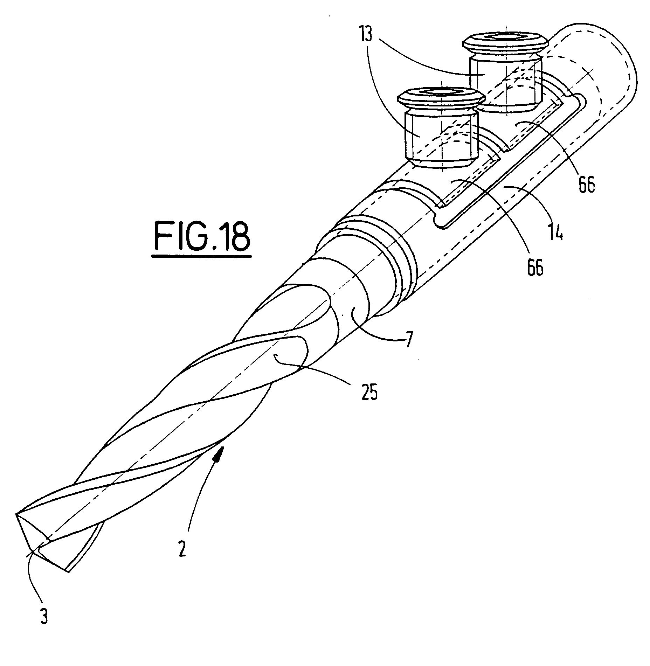

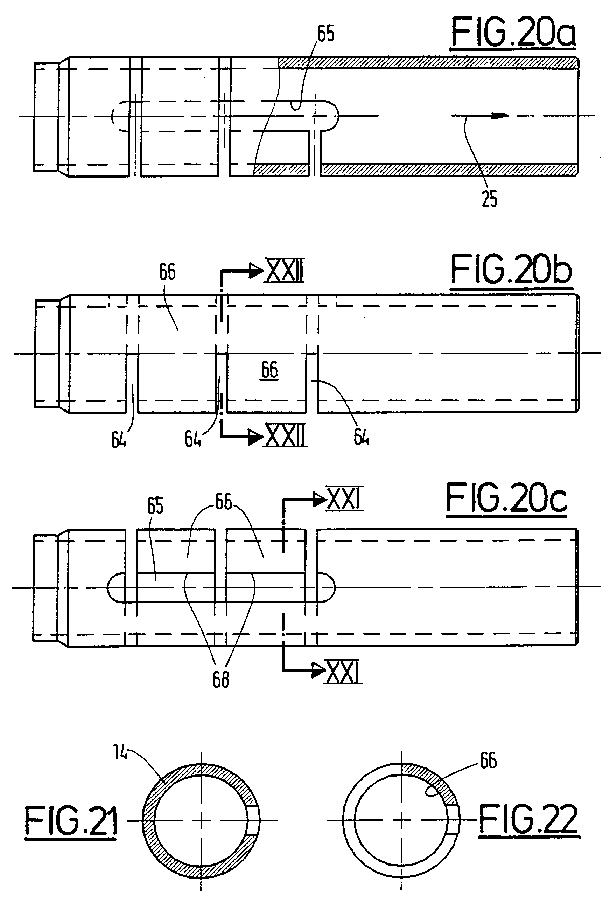

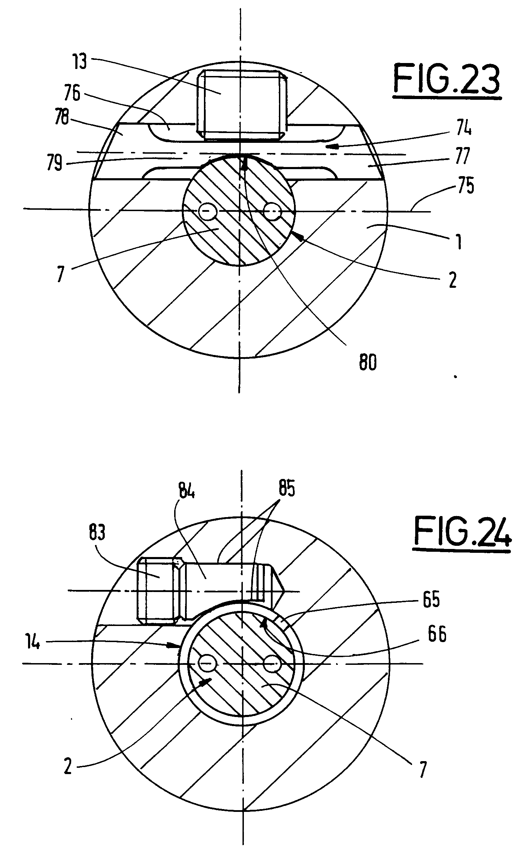

Bei der Ausführungsform der Spannung gemäß Fig. 23 ist keine den Bohrerschaft 7 umspannende Hülse 14 vorhanden. Eine solche Ausführungsform kann aus konstruktiven Gründen geboten sein. Hier ist gewissermaßen anstelle bei der Ausführungsform nach Fig. 18-22 vorhandenen Federzungen 66 jeder Fixierschraube 13 ein separates Federelement 74 zugeordnet, welches in eine parallel zum Durchmesser 75 eingebrachte Querbohrung 76 eingesetzt ist. Das Federelement 74 kann aus einem zylindrischen Stift hergestellt sein. Es enthält zwei in der Querbohrung 76 formschlüssig einliegende Enden 77,78 mit einer mittleren Taille 79 und einer darin ausgeformten, der Umfangsform des Bohrerschaftes 7 angepaßten Anlagemulde 80 im Beaufschlagungsbereich der Fixierschraube 13. Das Federelement 74 dient zur Übertragung des von der Fixierschraube 13 auf den Bohrerschaft 7 auszuübenden Spanndruckes.

Bei der Ausführungsform nach Fig. 24 wirkt eine in Tangentialrichtung zum Umfang des Bohrerschaftes in den Grundkörper 1 eingeschraubte Fixierschraube 83 auf einen in dieselbe Richtung wirksamen Spannkeil 84, dessen Keilfläche 85 die Federzungen 66 der den Bohrerschaft 7 umgebenden Hülse 14 nach Art der in Fig. 18 ff dargestellten Fixierschrauben 13 beaufschlagt. Es können in Richtung der Grundkörperachse 25 verteilt mehrere derartige Spannkeile 84 zur reibschlüssigen Spannung des Bohrerschaftes 7 vorhanden sein. Dabei kann der Keilwinkel der Keilfläche 85 so gewählt sein, daß eine Selbsthemmung vorliegt. Die Keilfläche 85 kann auch kurvenförmig konkav ausgebildet sein, um Flächenpressung und Spannverhalten zu optimieren.

## Patentansprüche

1. Rundlaufwerkzeug zum Bohren und Anfasen in einem gemeinsamen Vorschub,
- mit einem Grundkörper (1) als Werkzeughalter,
- mit einem konzentrisch zur Grundkörperlängsachse (25) darin einspannbaren Bohrer (2) sowie
- mit mindestens einem am bohrerseitigen Ende (4) des Grundkörpers (1) mit seiner Fasschneidenspitze (61) in den Bereich einer Nebenfreifläche (72) eines Bohrers verstellbaren Faswerkzeug mit einer Senkschneide (73),
dadurch gekennzeichnet,
daß die Verstellrichtung (23) des Faswerkzeuges (6) rechtwinklig zur Bohrerachse verläuft.

2. Werkzeug nach Anspruch 1,
dadurch gekennzeichnet
daß das Faswerkzeug (6) einen in beliebigen Verschiebestellungen auf einer Montagefläche (21) am Grundkörper (1) klemmbaren, plattenförmigen Schneidkörper (6) enthält, der mit einem über seine Auflagefläche (18) hinausstehenden Anlagevorsprung (20) in eine gegenüber der Montagefläche (21) vertiefte Grundkörpernut (22) mit etwa in Verstellrichtung (23) verlaufender Nutlängsrichtung eingreift und in einer innerhalb des von Montagefläche (21) und Anlagevorsprung (20) gebildeten Winkels liegenden Richtung am Grundkörper (1) verspannt ist.

3. Werkzeug nach Anspruch 2,
dadurch gekennzeichnet,
daß der Anlagevorsprung 20 eine sich im wesentlichen in Verstellrichtung (23) erstreckende Anlagerippe (27) ist.

4. Werkzeug nach Anspruch 3,
dadurch gekennzeichnet,
daß sich die Anlagerippe (27) über im wesentlichen die gesamte Schneidkörperbreite (26) erstreckt, die sich in montiertem Zustand etwa rechtwinklig zur Bohrerachse (25) erstreckt.

5. Werkzeug nach einem der Ansprüche 2 bis 4,
dadurch gekennzeichnet,
daß der Schneidkörper (6) in montiertem Zustand gleichermaßen durch eine Haltekraft mit seinem Anlagevorsprung (20) oder der Druckflanke (28) seiner Anlagerippe (27) in Richtung etwa zur Bohrerspitze (3) gegen eine Nutanlageflanke (29) des Grundkörpers (1) gepreßt und mit seiner Auflagefläche (18) gegen die Montagefläche (21) am Grundkörper (1) beaufschlagt ist.

6. Werkzeug nach einem der Ansprüche 2 bis 5,
dadurch gekennzeichnet,
daß der Schneidkörper (6) an seinem in montiertem Zustand der Bohrerspitze (3) abgewandten Ende (30) zwischen Deckfläche (17) und rückseitiger Stirnfläche (31) mit einer nach Art einer Faskante ausgebildeten, zwischen diesen Flächen wirksamen Schrägfläche (32) versehen ist, die von einem Haltemittel, insbesondere einer Spannschraube (5) etwa lotrecht beaufschlagt wird.

7. Werkzeug nach Anspruch 6,
dadurch gekennzeichnet,
daß das Haltemittel die Kopfflanke einer etwa lotrecht zur Montagefläche (21) in den Grundkörper (1) eingeschraubten Senkkopfschraube ist.

8. Werkzeug nach Anspruch 6 oder 7,
gekennzeichnet durch
eine vom Schraubenkopf beaufschlagte, nach Art einer Unterlegscheibe wirksame Spannpratze (15), die mit einer Drucknase (16) die rückseitige Schrägfläche (32) des Schneidkörpers (6) beaufschlagt.

9. Werkzeug nach Anspruch 8,
gekennzeichnet durch
eine zur Schneidkörperschrägfläche (32) etwa parallele Druckfläche (36) der Drucknase (16).

10. Werkzeug nach einem der Ansprüche 8 bis 10,
gekennzeichnet durch
einen dem Konusmantel des Schraubenkopfes entsprechenden, von ihm beaufschlagten Innenkonus (39) der Spannpratze (15).

11. Werkzeug nach einem der Ansprüche 7 bis 9,
gekennzeichnet durch
einen in Axialrichtung (40) der Schraube (5) an die Spannpratze (15) angeformten Ringkragen (41) zur führungsmäßigen Umfassung des kopfseitigen Endes des Schraubenschaftes (37).

12. Werkzeug nach einem der Ansprüche 8 bis 11
dadurch gekennzeichnet,
daß die Spannpratze (15) die Schraubendeckfläche (43) mit einem zur Schraubenachse (35) hin einwärtsgebördelten Hintergriff (44) unverlierbar umfaßt.

13. Werkzeug nach einem der Ansprüche 8 bis 11,
dadurch gekennzeichnet,
daß die Spannpratze (45) mit ihrer dem Schneidkörper (6) abgewandten Umfangsseite (46) gegenüber der der Bohrerspitze (3) abgewandten Seitenwand (47) der Grundkörpernut (22) abgestützt ist (Fig.12).

14. Werkzeug nach einem der Ansprüche 8 bis 13,
gekennzeichnet durch
einen parallel zur Schraubenachse (35) in den Grundkörper (1) eingebrachten Spannstift (49), an dessen Flanke die Spannpratze (15) mit ihrer dem Schneidkörper (6) abgewandten Umfangsseite (48) abgestützt ist.

15. Werkzeug nach Anspruch 14,
gekennzeichnet durch
eine nutartige Ausnehmung (50) mit etwa zur Schraubenachse (35) paralleler Nutlängsrichtung (51) zur mit dazu etwa paralleler Stiftachse geführten Einlage des Spannstiftes (49) als gegenüber der Spannpratze (15) wirksame Drehsicherung.

16. Werkzeug nach einem oder mehreren der vorhergehenden Ansprüche,
gekennzeichnet durch
eine Ausmuldung (52) der rückseitigen Stirnfläche (31) des Schneidkörpers (6) zum über den Verstellbereich möglichen, partiell einliegenden und als Verliersicherung wirksamen Hindurchreichen des Schaftes (37) der Spannschraube (5) oder der Spannpratze (15).

17. Werkzeug nach einem der Ansprüche 4 bis 16,
dadurch gekennzeichnet,
daß im Bereich des bohrerseitigen Endes (55) ein Federglied (56) aus der Nutanlageflanke (29) des Grundkörpers (1) in Richtung auf die Druckflanke (28) der Anlagerippe (27) vorsteht.

18. Werkzeug nach Anspruch 17,
dadurch gekennzeichnet,
daß das Federglied (56) der Umfang eines etwa parallel zur Schraubenachse (35) in den Grundkörper (1) eingebrachten Spannstiftes (58) ist.

19. Werkzeug nach einem der Ansprüche 14 oder 18,
dadurch gekennzeichnet,
daß der Spannstift (58) die Form eines etwa in Langsrichtung geschlitzten Rohres aufweist und daß die Rohrwände radial nach innen einfederbar sind.

20. Werkzeug nach einem der Ansprüche 18 bis 20,
dadurch gekennzeichnet,
daß die Breite (53) der Grundkörpernut (22) etwa der rechtwinklig zur Verstellrichtung (23) wirksamen Breite (54) der Anlagerippe (27) entspricht mit der Ausnahme, daß die Nutbreite (60) am bohrerseitigen Nutende (55) um etwa das Vorstehmaß (57) des Federgliedes (58) größer ist als die Nutbreite (53) am radial äußeren Nutende.

21. Werkzeug nach einem oder mehreren der vorhergehenden Ansprüche,
dadurch gekennzeichnet,
- daß der Bohrer (2) von einer metallischen Hülse (14) umgeben ist,
- daß die Hülse (14) durch in Umfangsrichtung (69) verlaufende und nebeneinander angeordnete, im wesentlichen zueinander parallele Schlitze (64) sowie durch einen in Axialrichtung (Achse 25) verlaufenden Hülsenmantelschlitz (65) radial einfederbare, sich über einen Teil des Hülsenumfanges erstreckende Mantelzungen (66) aufweist,
- daß der Bohrer (2) in einer ihn umgebenden Hülse (14) im Grundkörper (1) einliegt und
- daß die Mantelzungen (66) von die Grundkörperwand etwa radial durchsetzenden Fixierschrauben (13) beaufschlagt und gegen den zu spannenden Bohrerschaft (7) gepreßt werden.

22. Werkzeug nach Anspruch 21,
dadurch gekennzeichnet,
daß die Hülse (14) aus gehärtetem Stahl, insbesondere aus Federstahl besteht.

23. Werkzeug nach Anspruch 21 oder 22,
dadurch gekennzeichnet,
daß die die Zungen (66) zwischen sich bildenden Umfangsschlitze (64) sich über einen Umfangswinkel (67) von ca. 270° erstrecken.

24. Werkzeug nach einem der Ansprüche 21 bis 23,
dadurch gekennzeichnet,
daß die freien Zungenenden (68) in Bohrerdrehrichtung (69) weisen.

25. Werkzeug nach einem der Ansprüche 21 bis 24,
gekennzeichnet durch
die Limitierung der Einschraubtiefe der Fixierschrauben (13).

26. Werkzeug nach einem oder mehreren der vorhergehenden Ansprüche,
dadurch gekennzeichnet,
daß die Fixierschraube (13) mittelbar über ein in einer Querbohrung (76) im Grundkörper (1) befindliches Federelement (74) spannend auf den Bohrerschaft (7) einwirkt.

27. Werkzeug nach einem oder mehreren der vorhergehenden Ansprüche,
dadurch gekennzeichnet,
daß eine Fixierschraube (83) mittelbar über einen tangential den Bohrerschaft (7) beaufschlagenden Spannkeil (84) spannend auf den Bohrer (2) einwirkt.

## Claims

1. A rotary tool for drilling and chamfering in one common feeding operation,
- with a base body (1) as the tool holder,
- with a drill (2) that can be clamped therein concentrically with the longitudinal axis (25) of the base body, as well as
- with at least one chamfering tool with a chamfer cutter (73) at the end (4) of the base body (1) on the drill side, displaceable with its chamfer cutter tip (61) into the zone of a minor flank (72) of a drill,
characterized in that
the adjustment direction (23) of the chamfering tool (6) extends at right angles to the axis of the drill.

2. A tool according to claim 1,
characterized in that
the chamfering tool (6) contains a plate-shaped cutter body (6) which can be clamped on a mounting face (21) on the base body (1) in arbitrary displacement positions, which cutter body engages with an abutting projection (20) in a groove (22) of the base body, sunk relative to the mounting face (21) and extending approximately in the adjustment direction (23) and is clamped on the base body (1) in a direction lying within the angle formed by the mounting face (21) and the abutting projection (20).

3. A tool according to claim 2,
characterized in that
the abutting projection (20) is an abutting rib (27) extending substantially in the adjustment direction (23).

4. A tool according to claim 3,
characterized in that
the abutting rib (27) extends over substantially the whole width (26) of the cutter body which extends in its mounted state approximately at right angles to the axis (25) of the drill.

5. A tool according to one of claims 2 to 4,
characterized in that
in its mounted state, the cutter body (6) is pressed by a loading force both with its abutting projection (20) or the pressure flank (28) of its abutting rib (27) approximately in the direction towards the drill tip (3) against an abutting flank (29) of the groove of the base body (1) and is loaded with its bearing face (18) against the mounting face (21) on the base body (1).

6. A tool according to one of claims 2 to 5,
characterized in that
at its end (30) remote from the drill tip (3) in its mounted state, the cutter body (6) is provided between its outer face (17) and the rear end face (31) with an inclined face (32) formed in the manner of a chamfering edge and acting between these faces, which face (32) is acted on by a holding means, in particular a clamping screw (5), approximately in a perpendicular direction.

7. A tool according to claim 6,
characterized in that
the holding means is the head flank of a countersunk head screw screwed approximately perpendicularly to the mounting face (21) into the base body (1).

8. A tool according to claim 6 or 7,
characterized by
a clamping claw (15) acted on by the screwhead and acting in the manner of a washer which acts with a pressure cam (16) on the rear inclined face (32) of the cutter body (6).

9. A tool according to claim 8,
characterized by
a pressure face (36) of the pressure cam (16) which is approximately parallel to the inclined face (32) of the cutter body.

10. A tool according to one of claims 8 to 9
characterized by
an internal cone (39) of the clamping claw (15) corresponding to the conical lateral surface of the screw head and acted on thereby.

11. A tool according to one of claims 7 to 9,
characterized by
an annular collar (41) formed on the clamping claw (15) in the axial direction (40) of the screw (5), for surrounding the end of the screw shank (37) on the side of the head for the purpose of guidance.

12. A tool according to one of claims 8 to 11,
characterized in that
the clamping claw (15) surrounds the top screw face (43) in a captive manner by a rearward grip (44) inwardly crimped towards the screw axis (35).

13. A tool according to one of claims 8 to 11,
characterized in that
the clamping claw (45) is supported with its circumferential side (46) remote from the cutter body (6) on the side wall (47) of the groove (22) of the base body remote from the drill tip (3) (Figure 12).

14. A tool according to one of claims 8 to 13,
characterized by
a clamping pin (49) inserted into the base body (1) parallel to the screw axis (35), on whose flank the clamping claw (15) is supported with its circumferential side (48) remote from the cutter body (6).

15. A tool according to claim 14,
characterized by
a groove-type recess (50) with a longitudinal groove direction (51) approximately parallel to the screw axis (35), for the insertion of the clamping pin (49) with a pin axis carried approximately parallel thereto, as a means effective for preventing rotation relative to the clamping claw (15).

16. A tool according to one or more of the preceding claims,
characterized by
a trough (52) of the rear end face (31) of the cutter body (6), for allowing a shaft (37) of the clamping screw (5) or the clamping claw (15) to pass over the adjustment range, being partially inserted and acting as a means preventing loss.

17. A tool according to one of claims 4 to 16,
characterized in that
in the zone of the end (55) of the drill side, a spring element (56) projects from the groove-bearing flank (29) of the base body (1) in the direction towards the pressure flank (28) of the abutting rib (27).

18. A tool according to claim 17,
characterized in that
the spring element (56) is the circumference of a clamping pin (58) inserted into the base body (1) approximately parallel to the screw axis (35).

19. A tool according to one of claims 14 or 18,
characterized in that
the clamping pin (58) has the shape of a pipe slit approximately in the longitudinal direction and that the pipe walls can be radially and resiliently deflected inwards.

20. A tool according to one of claims 18 to 20,
characterized in that
the width (53) of the groove (22) of the base body corresponds approximately to the width (54) of the abutting rib (27) effective at right angles to the adjustment direction (23), with the exception that the width (60) at the end (55) of the groove on the drill side is greater by approximately the projecting distance (57) of the spring element (58) than the groove width (53) at the radially outer end of the groove.

21. A tool according to one or more of the preceding claims,
characterized in that
- the drill (2) is surrounded by a metal sleeve (14),
- the sleeve (14) has slits (64) extending in the circumferential direction, arranged next to one another and substantially parallel to one another, as well as shell tongues (66) capable of a radial spring deflection, extending in the axial direction (axis 25) through a slit (65) of the sleeve shell and ranging over a portion of the circumference of the sleeve,
- the drill (2) lies in a sleeve (14) in the base body (1) surrounding it and
- the shell tongues (66) are acted on by fixing screws (13) passing approximately radially through the wall of the base body and are pressed against the drill shank (7) to be clamped.

22. A tool according to claim 21,
characterized in that
the sleeve (14) consists of hardened steel, in particular of spring steel.

23. A tool according to claim 21 or 22,
characterized in that
the circumferential slits (64), forming the tongues (66) between them, extend over a circumferential angle (67) of approximately 270°.

24. A tool according to one of claims 21 to 23,
characterized in that
the free tongue ends (68) point in the direction of rotation (59) of the drill.

25. A tool according to one of claims 21 to 24,
characterized by
the limitation of the screwing-in depths of the fixing screws (13).

26. A tool according to one or more of the preceding claims,
characterized in that
the fixing screw (13) acts indirectly with a clamping effect on the drill shank (7) by means of a spring element (74) located in a transverse bore (76) in the base body (1).

27. A tool according to one or more of the preceding claims,
characterized in that
a fixing screw (83) acts indirectly with a clamping effect on the drill (2) by means of a clamping wedge (84) tangentially acting on the drill shank (7).

## Revendications

1. Outil rotatif destiné au perçage et au lamage en une passe commune, comprenant :
- un corps de base (1) en tant que porte-outil,
- un foret (2) susceptible d'être serré dans le corps de base et concentriquement à l'axe longitudinal (25) de celui-ci, et
- au moins un outil de chanfreinage, doté d'un tranchant de fraisage (73), susceptible d'être déplacé à l'extrémité (4) côté foret du corps de base (1) avec la pointe de son tranchant de chanfreinage (61) dans la région d'une surface libre annexe (72) d'un foret,
caractérisé en ce que la direction de déplacement (23) de l'outil de chanfreinage (6) s'étend perpendiculairement à l'axe du foret.

2. Outil selon la revendication 1, caractérisé en ce que l'outil de chanfreinage (6) comprend un corps de coupe en forme de plaquette (6), susceptible d'être serré dans des positions de déplacement quelconques sur une surface de montage (21) sur le corps de base (1), ledit corps de coupe étant engagé au moyen d'une saillie de contact (20), qui dépasse au-delà de sa surface d'appui (18), dans une gorge (22) du corps de base en renfoncement par rapport à la surface de montage (21) et dont la direction longitudinale s'étend approximativement dans la direction de déplacement (23), et étant serré sur le corps de base (1) dans une direction située à l'intérieur de l'angle formé par la surface de montage (21) et par la saillie de contact (20).

3. Outil selon la revendication 2, caractérisé en ce que la saillie de contact (20) est une nervure de contact (27) qui s'étend sensiblement dans la direction de déplacement (23).

4. Outil selon la revendication 3, caractérisé en ce que la nervure de contact (27) s'étend sensiblement sur la totalité de la largeur du corps de coupe (26), lequel s'étend à l'état monté approximativement à angle droit par rapport à l'axe de foret (25).

5. Outil selon l'une des revendications 2 à 4, caractérisé en ce que le corps de coupe (6) est pressé à l'état monté de façon régulière par une force de maintien, au moyen de sa saillie de contact (20) ou du flanc de pression (28) de sa nervure de contact (27) approximativement en direction de la pointe (3) du foret, contre un flanc de contact (29) de la gorge du corps de base (1), et en ce qu'il est poussé par sa surface d'appui (18) contre la surface de montage (21) sur le corps de base (1).

6. Outil selon l'une des revendications 2 à 5, caractérisé en ce que le corps de coupe (6) est pourvu, à son extrémité (30) détournée de la pointe (3) de foret à l'état monté, entre une surface de couverture (17) et une surface frontale postérieure (31), d'une surface oblique (31) réalisée à la manière d'une arête de chanfrein et agissant entre la surface de couverture et la surface frontale postérieure, ladite surface oblique étant sollicitée approximativement perpendiculairement par un organe de maintien, en particulier par une vis de serrage (5).

7. Outil selon la revendication 6, caractérisé en ce que l'organe de maintien est formé par le flanc de tête d'une vis à tête traisée vissée approximativement perpendiculairement à la surface de montage (21) dans le corps de base (1).

8. Outil selon l'une ou l'autre des revendications 6 et 7, caractérisé par une patte de serrage (15) attaquée par la tête de vis et agissant à la manière d'une rondelle d'appui, qui sollicite au moyen d'un doigt de pression (16) la surface oblique postérieure (32) du corps de coupe (6).

9. Outil selon la revendication 8, caractérisé par une surface de pression (36) du doigt de pression (16) approximativement parallèle à la surface oblique du corps de coupe (32).

10. Outil selon l'une des revendications 8 à 10, caractérisé par le fait que la patte de serrage (15) présente un cône intérieur (39) qui correspond à l'enveloppe conique de la tête de vis, et sollicité par celle-ci.

11. Outil selon l'une des revendications 7 à 9, caractérisé par une collerette annulaire (41), formée en direction axiale (40) de la vis (5) sur la patte de serrage (15), pour entourer et guider l'extrémité côté tête de la tige de vis (37).

12. Outil selon l'une des revendications 8 à 11, caractérisé en ce que la patte de serrage (15) entoure de façon imperdable la surface extérieure de vis (43) au moyen d'un élément de saisie postérieur (44) rabattu vers l'intérieur en direction de l'axe de vis (35).

13. Outil selon l'une des revendications 8 à 11, caractérisé en ce que la patte de serrage (45) est appuyée, avec son côté périphérique (46) détourné du corps de coupe (6), par rapport à la paroi latérale (47), détournée de la pointe de foret (3), de la gorge (22) du corps de base (figure 12).

14. Outil selon l'une des revendications 8 à 13, caractérisé par une tige de serrage (49) introduite dans le corps de base (1) parallèlement à l'axe de vis (35), contre le flanc de laquelle s'appuie la patte de serrage (15) par son côté périphérique (48) détourné du corps de coupe (6).

15. Outil selon la revendication 14, caractérisé par un évidement (50) en forme de gorge avec une direction longitudinale (51) approximativement parallèle à l'axe de vis (35), pour une mise en place guidée de la tige de serrage (45) de façon que l'axe de la tige soit approximativement parallèle à cette direction, en tant que sécurité anti-rotation agissant par rapport à la patte de serrage (15).

16. Outil selon l'une ou plusieurs des revendications précédentes, caractérisé par un creux (52) de la surface postérieure (31) du corps de coupe (6) pour permettre sur la zone de déplacement une traversée partielle et agissant en tant que sécurité anti-perte, de la tige (37) de la vis de serrage (5) ou de la patte de serrage (15).

17. Outil selon l'une des revendications 4 à 16, caractérisé en ce que, dans la région de l'extrémité côté foret (55) dépasse un élément de ressort (56) depuis le flanc de contact (29) de la gorge du corps de base (1) en direction du flanc de pression (28) de la nervure de contact (27).

18. Outil selon la revendication 17, caractérisé en ce que l'élément de ressort (56) est la périphérie d'une tige de serrage (58) introduite dans le corps de base (1) approximativement parallèlement à l'axe de la vis (35).

19. Outil selon l'une des revendications 14 ou 18, caractérisé en ce que la tige de serrage (58) présente la forme d'un tube fendu approximativement en direction longitudinale, et en ce que les parois du tube sont capables de s'écraser élastiquement vers l'intérieur.

20. Outil selon l'une des revendications 18 à 20, caractérisé en ce que la largeur (53) de la gorge (22) du corps de base correspond approximativement à la largeur (54) de la nervure de contact (27), active perpendiculairement à la direction de déplacement (23), à l'exception du fait que la largeur de gorge (60) à l'extrémité de gorge (55) côté foret est supérieure, approximativement de la valeur du dépassement (57) de l'élément de ressort (58), à la largeur de gorge (53) à l'extrémité radiale extérieure.

21. Outil selon l'une ou plusieurs des revendications précédentes,
caractérisé en ce que :
- le foret (2) est entouré par une douille métallique (14),
- la douille (14) présente des languettes enveloppes (66), capables de se déformer élastiquement radialement vers l'intérieur et s'étendant sur une partie de la périphérie de la douille, formées par des fentes (64) qui s'étendent en direction périphérique (69), agencées les unes à côté des autres et essentiellement parallèles les unes aux autres, ainsi que par une fente (65) de l'enveloppe de douille, qui s'étend en direction axiale (axe 25),
- le foret (2) est logé dans une douille (14) qui l'entoure dans le corps de base (1), et
- les languettes enveloppes (66) sont sollicitées par des vis de fixation (13) qui traversent la paroi du corps de base approximativement radialement et sont pressées contre la tige du foret (7) à serrer.

22. Outil selon la revendication 21, caractérisé en ce que la douille (14) est réalisée en acier durci, en particulier en acier à ressort.

23. Outil selon l'une ou l'autre des revendications 21 et 22, caractérisé en ce que les fentes périphériques (64) qui forment entre elles les languettes (66) s'étendent sur un angle périphérique (67) d'environ 270°.

24. Outil selon l'une des revendications 21 à 23, caractérisé en ce que les extrémités libres des languettes (68) sont dirigées dans la direction de rotation du foret (69).

25. Outil selon l'une des revendications 21 à 24, caractérisé par le fait que la profondeur de vissage des vis de fixation (13) est limitée.

26. Outil selon l'une ou plusieurs des revendications précédentes, caractérisé en ce que la vis de fixation (13) agit de façon indirecte via un élément de ressort (74) qui se trouve dans un perçage transversal (76) dans le corps de base (1) en serrant la tige du foret (7).

27. Outil selon l'une ou plusieurs des revendications précédentes, caractérisé en ce qu'une vis de fixation (83) agit indirectement via un coin de serrage (84) qui sollicite tangentiellement la tige de foret (7) afin de serrer le foret (2).
